Europäisches Patentamt

European Patent Office

Office européen des brevets

(11) Numéro de publication : **0 158 563**
**B1**

(12) # FASCICULE DE BREVET EUROPÉEN

(45) Date de publication du fascicule du brevet :
08.07.87

(21) Numéro de dépôt : **85400593.1**

(22) Date de dépôt : **27.03.85**

(51) Int. Cl.⁴ : **C 01 B 33/02**, C 22 B 9/22,
B 01 J 6/00

(54) **Procédé de fabrication non polluant de silicium massif à partir de silicium divisé.**

(30) Priorité : **02.04.84 FR 8405140**

(43) Date de publication de la demande :
**16.10.85 Bulletin 85/42**

(45) Mention de la délivrance du brevet :
**08.07.87 Bulletin 87/28**

(84) Etats contractants désignés :
**BE DE FR GB IT NL**

(56) Documents cités :
**FR-A- 2 171 417**
**FR-A- 2 438 499**
**US-A- 3 362 798**
**US-A- 4 193 757**

(73) Titulaire : **RHONE-POULENC SPECIALITES CHIMI-
QUES**
**"Les Miroirs" 18, Avenue d'Alsace**
**F-92400 Courbevoie (FR)**

(72) Inventeur : **Jacubert, Serge**
**12, rue Jules Herbron**
**F-78220 - Viroflay (FR)**
Inventeur : **Tugaye, Anne**
**98, rue Pierre Brossollette**
**F-92320 - Chatillon/Sous/Bagneux (FR)**
Inventeur : **Verdier, Jean-Michel**
**257, rue du faubourg St Honoré**
**F-75010 - Paris (FR)**

(74) Mandataire : **Savina, Jacques et al**
**RHONE-POULENC INTERSERVICES Service Brevets
Chimie 25, quai Paul Doumer**
**F-92408 Courbevoie Cédex (FR)**

EP 0 158 563 B1

# 0 158 563

## Description

La présente invention concerne un procédé de fabrication non polluant de silicium massif à partir de silicium divisé. Elle a trait plus particulièrement à la fabrication de silicium massif à partir de silicium en poudre ou en copeaux.

Le silicium est un matériau très utilisé dans l'industrie électronique des semi-conducteurs. Dans la fabrication des tranches de silicium, une partie importante du matériau est perdue sous forme de copeaux lors du sciage du barreau ; il existe par ailleurs, des procédés de production de silicium comme celui décrit dans la demande européenne EP-0 100 268 au nom de la Demanderesse qui conduisent à l'obtention de silicium en poudre. Il serait intéressant de disposer d'un procédé de fusion non polluante du silicium divisé provenant notamment de ces sources, afin de pouvoir utiliser ou réutiliser le silicium massif obtenu en ayant conservé la pureté du silicium divisé de départ : ceci constitue un besoin auquel se propose de répondre la présente invention.

Il est connu de fondre du silicium dans des creusets en graphite chauffés par les parois. Cette fusion est très polluante car il y a formation de carbure de silicium très gênant. Il a été proposé dans la demande internationale PCT WO 84/00 156 de fondre le silicium dans un creuset en graphite et de se servir de la couche de carbure de silicium comme revêtement protecteur. Cette solution n'est toutefois que partielle car il se produit quand même une pollution du silicium fondu au cours de l'opération.

Il est également connu de fondre le silicium dans des creusets en quartz chauffés par les parois par exemple tel que décrit dans la demande européenne EP 55 310. Dans ce cas, il se produit une perte importante de matière due à l'adhésion du silicium sur le quartz. Par ailleurs, ce procédé se révèle peu économique car il faut généralement changer le creuset en quartz très pur après peu d'opérations. On doit ajouter que ces procédés de fusion sont décrits pour la fusion de silicium à l'état massique ou semi-massique aucun d'eux n'ayant posé le problème de la fusion non polluante de silicium en poudre en particulier.

Ainsi, jusqu'à présent, ni les procédés de fusion, ni les dispositifs de chauffage, ni le silicium de départ n'étaient adaptés pour répondre au besoin que vise à combler la présente invention.

En effet, un des buts que se propose la présente invention est de fournir un procédé non polluant pour la fusion de silicium à l'état divisé, ce procédé étant simple et d'une mise en œuvre aisée.

Ce but est atteint, selon l'invention, par l'utilisation comme moyen de chauffage permettant d'obtenir la fusion de silicium divisé, d'un jet de plasma ultra pur et par la réalisation d'une épaisseur de silicium non fondu au contact du creuset, grâce au contrôle de la zone fondue par le plasma.

La présente invention concerne en effet un procédé de fabrication non polluant de silicium massif à partir de silicium divisé, caractérisé en ce que :

on introduit le silicium sous forme divisée dans un creuset

on chauffe le silicium par un plasma jusqu'à la fusion en contrôlant l'étendue de la zone fondue pour conserver une épaisseur de silicium non fondu au contact du creuset

on arrête le chauffage et on laisse refroidir puis on récupère le bloc de silicium massif obtenu.

Selon le procédé de l'invention, le silicium est mis en œuvre sous forme divisée : poudre, granulés, copeaux, etc...

Le procédé peut être utilisé pour du silicium de qualité métallurgique, mais il prend davantage d'intérêt lorsque le silicium est pur et qu'il doit être fondu en conservant une haute pureté.

Selon le procédé de l'invention, la chaleur nécessaire à la fusion du silicium est apportée par un jet de plasma ultra-pur par exemple un plasma dont le gaz plasmagène est l'argon, produit de préférence par induction. Les plasmas inductifs ont une vitesse de gaz faible en sortie de torche, ce qui rend leur utilisation selon l'invention plus aisée que les plasmas d'arc car on peut approcher la sortie d'une torche inductive plus près d'un creuset contenant par exemple de la poudre sans risquer l'envolement de la poudre.

Par ailleurs, ils permettent d'éviter tout risque de pollution par des électrodes.

Comme générateur de plasma inductif, on peut, par exemple, mettre en œuvre selon l'invention le dispositif décrit dans le brevet français n° 2 438 499.

On contrôle l'étendue de la zone fondue par le temps de traitement sur une zone d'impact donnée, la zone d'impact du plasma correspondant à la section du plasma ; le temps de traitement est en particulier fonction de la puissance du plasma, du débit du gaz plasmagène, de la granulométrie du silicium divisé et de la distance du creuset par rapport à la sortie de la torche à plasma. On peut ainsi conserver une épaisseur de silicium non fondu au contact du creuset. Cette pellicule de silicium divisé conduit mal la chaleur ; elle diminue donc les pertes calorifiques et empêche la diffusion des impuretés provenant des parois du creuset dans le silicium fondu en limitant la température du creuset. L'épaisseur de cette pellicule de silicium divisé est généralement comprise entre 1 mm et 20 mm. Lorsque l'on a opéré la fusion du silicium dans la zone désirée, on arrête le chauffage, on laisse refroidir puis on récupère le bloc de silicium massif obtenu dont la pureté est identique à celle du silicium divisé de départ.

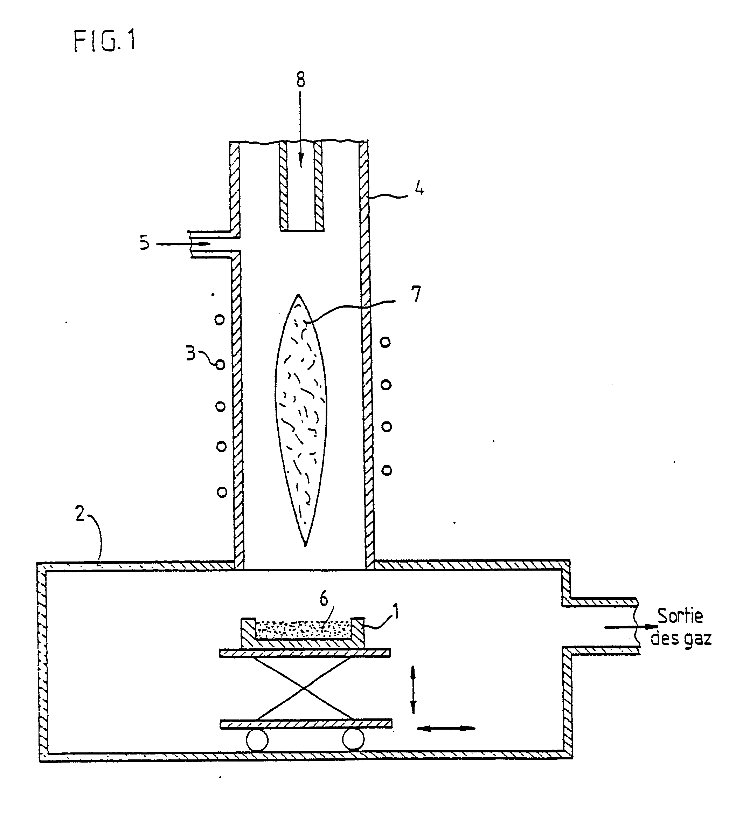

Le procédé selon l'invention va maintenant être décrit en faisant référence à une mise en œuvre dans un dispositif tel que celui présenté à la figure 1.

Le creuset (1) contenant le silicium divisé (6) peut être déplacé horizontalement par rapport à la

2

torche à plasma (7) de façon à agrandir la zone d'impact du plasma et à traiter ainsi une grande quantité de produit. Le creuset peut également être déplacé verticalement. Ceci permet, par exemple, de préchauffer le silicium divisé à une certaine distance de la sortie de torche, là où les gaz chauds ont perdu de la vitesse, et on évite ainsi l'envolement de poudre qui peut apparaître sur la poudre très fine à température ambiante. Dès que la poudre a dépassé une certaine température, dépendant de la pureté du silicium, elle devient plus cohésive et on peut alors rapprocher le creuset de la sortie de la torche à plasma et profiter ainsi des hautes températures.

L'enceinte (2) entourant le creuset peut être purgée de l'air qu'elle contient et maintenue, sous atmosphère d'argon, pour éviter les réactions du silicium avec l'oxygène et l'azote de l'air. Le gaz plasmagène lui-même a un effet d'inertage qui protège la zone d'impact du plasma.

Le plasma est produit par induction d'un courant haute fréquence produit par le générateur et circulant dans les spires (3) qui entourent un tube de quartz (4) dans lequel est injecté le gaz plasmagène (5). Le tube de quartz, et donc le plasma, sont dirigés vers le bas, verticalement ou selon un axe faisant un angle avec la verticale.

Le temps pendant lequel on laisse agir le plasma sans déplacer le creuset, détermine la profondeur de la zone fondue. Ce temps est à régler suivant les besoins en fonction de la puissance du plasma, du débit d'argon plasmagène, de la granulométrie du silicium divisé et de la distance du creuset par rapport à la sortie de la torche à plasma.

On déplace le creuset un nombre de fois et dans les directions nécessaires à la fusion du silicium pour obtenir un bloc de la forme souhaitée : barreau, cube, plaque etc... tout en conservant une épaisseur de silicium non fondu au contact des parois du creuset.

Après arrêt du plasma, ou simplement éloignement du creuset du plasma, on laisse le creuset refroidir sous atmosphère inerte, d'argon par exemple, puis on démoule le bloc de silicium massif obtenu.

## Exemple

Le plasma est obtenu dans un tube de quartz de diamètre 44 mm, avec une puissance de 12 KW et un débit d'argon de 15 N/mn additionné de 0,5 Nl/mn d'hydrogène, à pression atmosphérique. L'addition d'hydrogène (8) est destinée à augmenter la température du plasma et sa puissance calorifique, mais n'est pas obligatoire.

Environ 10 grammes de silicium en poudre de granulométrie intérieure à 40 $\mu$m sont placés dans un creuset cylindrique en quartz de 2,5 cm de diamètre.

En 20 à 30 mn, la poudre est fondue sur une épaisseur de 5 mm en plaçant le creuset à une distance de 0,5 à 1 cm de la sortie du tube de quartz.

On recueille après refroidissement sous atmosphère d'argon en bloc de silicium massif dont la pureté est quasiment identique à celle de la poudre de départ comme le prouve le tableau ci-après dans lequel les teneurs sont indiquées en ppm par rapport à Si en poids (les signes $\leqslant$ ou $<$ représentant les limites de détections).

| IMPURETES | IMPURETES DANS SILICIUM EN POUDRE | IMPURETES DANS LE BLOC DE SILICIUM MASSIF |
|---|---|---|
| Mo | $\leqslant$ 0,05 | $\leqslant$ 0,05 |
| W | $<$ 0,5 | $<$ 0,5 |
| Zn | $\leqslant$ 0,05 | $\leqslant$ 0,05 |
| Ni | 0,07 | 0,07 |
| Bi | $<$ 0,5 | $<$ 0,5 |
| Co | $\leqslant$ 0,05 | $\leqslant$ 0,05 |
| In | $<$ 0,5 | $<$ 0,5 |
| Ta | $<$ 0,5 | $<$ 0,5 |
| Mn | $<$ 0,05 | $<$ 0,05 |
| Fe | 0,35 | 0,30 |
| Cr | 0,06 | 0,04 |
| Mg | 0,10 | 0,07 |
| V | $\leqslant$ 0,05 | $\leqslant$ 0,05 |
| Ga | $<$ 0,5 | $<$ 0,5 |

**0 158 563**

(Suite)

| IMPURETES | IMPURETES DANS SILICIUM EN POUDRE | IMPURETES DANS LE BLOC DE SILICIUM MASSIF |
|---|---|---|
| Cu | < 0,05 | < 0,05 |
| Ti | < 0,05 | < 0,05 |
| Ca | 0,51 | 0,40 |
| Al | 0,20 | 0,20 |
| Na | 0,26 | 0,20 |
| Li | < 0,05 | < 0,05 |

**Revendications**

1. Procédé de fabrication non polluant de silicium massif à partir de silicium divisé, caractérisé en ce que :
on introduit le silicium sous forme divisée dans un creuset
on chauffe le silicium par un plasma jusqu'à la fusion en contrôlant l'étendue de la zone fondue pour conserver une épaisseur de silicium non fondu au contact du creuset
on arrête le chauffage et on laisse refroidir puis on récupère le bloc de silicium massif obtenu.

2. Procédé selon la revendication 1 caractérisé en ce que le plasma est un plasma inductif dont le gaz plasmagène est de préférence l'argon.

3. Procédé selon la revendication 1 caractérisé en ce que le contrôle de l'étendue de la zone fondue est effectué en contrôlant le temps de traitement sur une zone d'impact donnée, ledit temps de traitement étant fonction de la puissance du plasma, du débit du gaz plasmagène, de la granulométrie du silicium divisé et de la distance du creuset par rapport au plasma.

4. Procédé selon la revendication 1 caractérisé en ce que l'épaisseur de silicium non fondu au contact du creuset est comprise entre 1 mm et 20 mm.

**Claims**

1. Noncontaminating process for the manufacture of massive silicon from divided silicon, characterized in that :
silicon in divided form is introduced into a crucible
the silicon is heated with a plasma until it melts, the extent of the molten zone being controlled to retain a thickness of unmelted silicon in contact with the crucible
heating is stopped, cooling is allowed to take place and the block of massive silicon produced is then recovered.

2. Process according to Claim 1, characterized in that the plasma is an inductive plasma in which the plasma-forming gas is preferably argon.

3. Process according to Claim 1, characterized in that the control of the extent of the molten zone is performed by controlling the time of treatment over a given impact zone, the said time of treatment being a function of the power of the plasma, of the flowrate of the plasma-forming gas, of the particle size of the divided silicon and of the distance of the crucible in relation to the plasma.

4. Process according to Claim 1, characterized in that the thickness of unmelted silicon in contact with the crucible is between 1 mm and 20 mm.

**Patentansprüche**

1. Verfahren zur umweltfreundlichen Herstellung von massivem Silizium ausgehend von gespaltenem Silizium, dadurch gekennzeichnet :
daß man das Silizium in gespaltener Form in einen Schmelztiegel einbringt
das Silizium mittels eines Plasmas bis zum Schmelzpunkt erwärmt unter Kontrolle der Ausdehnung der geschmolzenen Zone, um eine gewisse Dicke des nicht geschmolzenen Siliziums zu erhalten, die in Kontakt mit dem Schmelztiegel steht,
man die Erwärmung beendet, abkühlen läßt und dann den Block des erhaltenen massiven Siliziums gewinnt.

2. Verfahren nach Anspruch 1, dadurch gekennzeichnet, daß das Plasma ein induktives Plasma ist, dessen plasmaerzeugendes Gas vorzugsweise Argon ist.

3. Verfahren nach Anspruch 1, dadurch gekennzeichnet, daß die Kontrolle der Ausdehnung der Schmelzzone bewirkt wird durch Kontrolle der Behandlungszeit in einer vorgegebenen Wirkungszone, wobei diese Behandlungszeit eine Funktion der Kraft des Plasmas, der Durchflußmenge des plasmaerzeugenden Gases, der Korngröße des gespaltenen Siliziums und der Entfernung des Schmelztiegels in Bezug auf das Plasma ist.

4. Verfahren nach Anspruch 1, dadurch gekennzeichnet, daß die Dicke des in Kontakt mit dem Schmelztiegel befindlichen nicht geschmolzenen Siliziums zwischen 1 mm und 20 mm beträgt.

FIG.1